# EUROPÄISCHE PATENTANMELDUNG

(11) **EP 4 339 479 A1**
(43) Veröffentlichungstag der Anmeldung: **20.03.2024**
(21) Anmeldenummer: 23194345.7
(22) Anmeldetag: 30.08.2023
(51) Int. Cl.: F16D 55/2265, F16D 55/227, F16D 65/02

(54) **SCHEIBENBREMSE FÜR EIN NUTZFAHRZEUG**

(30) Priorität: 15.09.2022 DE 102022123566
(71) Anmelder: KNORR-BREMSE Systeme für Nutzfahrzeuge GmbH, 80809 München (DE)
(72) Erfinder: ASEN, Alexander, 94428 Eichendorf (DE); MOLNAR, Markus, 94081 Fürstenzell (DE); FRICKE, Jens, 94474 Vilshofen (DE); ADELUNG, Matthias, 94081 Fürstenzell (DE)

(57) **Zusammenfassung**

Eine Scheibenbremse (1) für ein Nutzfahrzeug, mit einem eine Bremsscheibe (4) umfassenden Bremssattel (3), der an einem ortsfesten Bremsträger (2) durch zwei Lagerungen, bezogen auf die Bremsscheibe (4), axial verschiebbar befestigt ist, wobei die Lagerungen jeweils einen mit dem Bremsträger (2) fest verbundenen Führungsholm (10) aufweisen, von denen zur axialen Verschiebbarkeit des Bremssattels einer als Festlager (8) mit einer Festlagerachse (8a) und der andere in einem als Loslager ausgebildeten Gleitlager geführt ist, wobei zumindest das Festlager (8) eine den Führungsholm (10) umgreifende und verschiebegesichert in einer Sattelbohrung (7a) eines Lagerabschnitts (7) des Bremssattels (3) gehaltene Lagerbuchse (12) aufweist. Die Sattelbohrung (7a) ist in einem Lagerbereich (7b) des Lagerabschnitts (7) mit einer elliptischen Bearbeitung (14, 14a) ausgebildet.

## Beschreibung

Die Erfindung betrifft eine Scheibenbremse für ein Nutzfahrzeug nach dem Oberbegriff des Anspruchs 1.

Derartige Scheibenbremsen kommen insbesondere bei schweren Nutzfahrzeugen zum Einsatz. Dabei ist der auch unter der Bezeichnung Schiebesattel bekannte Bremssattel durch Lagerungen, die z.B. ein Festlager und ein Loslager aufweisen, mit einem fahrzeugseitigen Bremsträger verbunden.

Die Lagerungen sind jeweils mit einem Führungsholm versehen, welcher jeweils mit dem Bremsträger, üblicherweise durch Verschrauben, verbunden ist, wobei die Führungsholme in Gleitlagern des Bremssattels so geführt sind, dass eine axiale Verschiebung, bezogen auf die Bremsscheibe, gegenüber dem ortsfesten Bremsträger möglich ist.

Eines der Gleitlager ist als Festlager mit geringem Gleitspiel ausgebildet und dient in der Hauptsache der axialen Führung des Bremssattels, wobei das Lagerspiel so gering wie möglich gehalten ist.

Das andere Gleitlager hingegen weist als Loslager funktionsbedingt ein größeres Lagerspiel auf, da neben der axialen Führung auch ein Toleranzausgleich sowie thermisch bedingte Ausdehnungen des Bremssattels zu berücksichtigen sind.

Vor allem die Gleitbuchse des Festlagers besteht aus Metall, vorzugsweise einem Buntmetall oder einer Kombination mit Stahl, deren innere Mantelfläche, an der der Führungsholm anliegt, zylindrisch ausgebildet ist.

DE 10 2009 007 330 A1 beschreibt eine Fahrzeugscheibenbremse, mit einem achs- oder fahrwerksfest angeordneten Bremsträger und einem an mindestens einem Festlager und einem Loslager axial verschieblich gegenüber dem Bremsträger gelagerten Bremssattel, wobei sich das Festlager zusammensetzt aus einer zylindrischen Bohrung mit einer darin eingepressten starren Lagerbuchse und einem in der Lagerbuchse axial gleitbeweglichen Führungszapfen.

Bei Scheibenbremsen für Nutzfahrzeuge wird die festlagerseitige Führung des Bremssattels mittels einer eingepressten zylindrischen Metallbuchse realisiert. Diese wird wiederum mit Hilfe einer umlaufenden Nut in der zylindrischen Sattelbohrung axial fixiert, um eine Herauswandern der Buchse unter Betriebslast zu verhindern.

Hierbei wird es als nachteilig angesehen, dass sich durch das Gewicht des Bremszylinders, verschiedene Einbaulagen, Schrägverschleiß der Bremsbeläge und der Last aus dem Betriebsbremsmoment eine Kantenbelastung auf Holm und Lager jeweils an den Enden der Lagerung ergibt. Diese Kantenbelastung kann zu erhöhtem Verschleiß führen, welcher sich auf Geräuschbildung bzw. auf die Bremssattelverschiebbarkeit auswirken kann.

Der Erfindung liegt daher die Aufgabe zugrunde, eine Scheibenbremse der gattungsgemäßen Art so weiterzuentwickeln, dass mit konstruktiv einfachen Mitteln ein Verschleiß reduziert wird, wobei die oben genannten Nachteile vollständig bzw. größtenteils behoben sind.

Diese Aufgabe wird durch eine Scheibenbremse mit den Merkmalen des Anspruchs 1 gelöst.

Eine erfindungsgemäße Scheibenbremse für ein Nutzfahrzeug mit einem eine Bremsscheibe umfassenden Bremssattel, der an einem ortsfesten Bremsträger durch zwei Lagerungen, bezogen auf die Bremsscheibe, axial verschiebbar befestigt ist, wobei die Lagerungen jeweils einen mit dem Bremsträger fest verbundenen Führungsholm aufweisen, von denen zur axialen Verschiebbarkeit des Bremssattels einer der Führungsholme als Festlager mit einer Festlagerachse und der andere der Führungsholme in einem als Loslager ausgebildeten Gleitlager geführt ist, wobei zumindest das Festlager eine den Führungsholm umgreifende und verschiebegesichert in einer Sattelbohrung eines Lagerabschnitts des Bremssattels gehaltene Lagerbuchse aufweist. Die Sattelbohrung ist in einem Lagerbereich des Lagerabschnitts mit einer elliptischen Bearbeitung ausgebildet.

Es ergibt sich der Vorteil, dass die sich durch das Gewicht des (nicht gezeigten, aber leicht vorstellbaren) Bremszylinders der Scheibenbremse, verschiedene Einbaulagen, Schrägverschleiß der Bremsbeläge und der Last aus dem Betriebsbremsmoment ergebende Kantenbelastung auf Führungsholm und Lagerbuchse jeweils an den Enden der Lagerung, d.h. der Lagerbuchse durch die Sattelbohrung mit der elliptischen Bearbeitung bedeutend reduziert.

Die reduzierte Kantenbelastung ermöglicht zudem vorteilhaft, dass auch ein Verschleiß, welcher sich auf Geräuschbildung bzw. auf die Bremssattelverschiebbarkeit auswirken kann, vermindert wird.

Weitere vorteilhafte Ausbildungen der Erfindung sind in den Unteransprüchen angegeben.

In einer Ausführung ist die Lagerbuchse im zusammengebauten Zustand des Festlagers in der Sattelbohrung in dem Lagerbereich eingesetzt, wobei der Lagerbereich der Sattelbohrung zwischen einer ersten, äußeren Abstufung an einem ersten, äußeren Ende der Sattelbohrung und einer zweiten, inneren Abstufung an einem zweiten, inneren Ende der Sattelbohrung verläuft. Damit ist vorteilhaft ein kompakter Aufbau ermöglicht.

Es ist in einer weiteren Ausführung vorgesehen, dass die elliptische Bearbeitung der Sattelbohrung symmetrisch zu einer gedachten Mitte des Lagerbereichs der Sattelbohrung ausgebildet ist, wobei sich ein Innendurchmesser der Sattelbohrung ausgehend von der gedachten Mitte des Lagerbereichs der Sattelbohrung auf beiden Seiten der gedachten Mitte in Richtung der Festlagerachse des Festlagers zu den Enden der Sattelbohrung hin vergrößert. Auf diese Weise wird die Kantenbelastung auf die Lagerbuchse vorteilhaft gleichmäßig verringert.

In einer noch weiteren Ausführung steht eine Außenfläche der Lagerbuchse mit der Sattelbohrung so in Kontakt steht, dass sich dieser Kontakt in dem zusammengebauten Zustand in einem mittleren Bereich der Außenfläche der Lagerbuchse bezogen auf die Festlagerachse befindet, wenn die Scheibenbremse unbelastet ist. Auf diese Weise kann eine gleichmäßige Verringerung der Kantenbelastung vorteilhaft erreicht werden.

Eine weitere Ausführung sieht vor, dass die Enden der Sattelbohrung mit den Abstufungen jeweils eine Kante aufweisen, wobei ein jeweiliges Spiel zwischen der Außenfläche der zylindrischen Lagerbuchse und der Sattelbohrung mit der elliptischen Bearbeitung der Sattelbohrung gebildet ist. Dies ist vorteilhaft, da so die Kanten nicht ständig mit der Außenfläche der Lagerbuchse in Kontakt stehen.

In einer Ausführung schließt sich eine Ausdrehung koaxial zu der Sattelbohrung als Einformung in dem Lagerabschnitt an die erste, äußere Abstufung in Richtung der Festlagerachse nach außen hin an, deren Innendurchmesser größer als der Innendurchmesser der Sattelbohrung an dem äußeren Ende der Sattelbohrung ist. Damit ist ein vorteilhaft kompakter Aufbau und eine Trennung der Sattelbohrung von der Ausdrehung, die für weitere Funktionseinheiten vorgesehen ist, ermöglicht.

Eine weitere Ausführung sieht vor, dass die Lagerbuchse an ihrem äußeren Ende einen umlaufenden Bund aufweist, welcher mit der Abstufung zusammenwirkt und einen axialen Anschlag der Lagerbuchse in Richtung der Festlagerachse nach innen hin bildet. Der Vorteil hierbei besteht darin, dass einerseits die Lagerbuchse axial festgelegt ist und andererseits gleichzeitig ein kompakter Aufbau ermöglicht wird.

Es ist in einer noch weiteren Ausführung vorgesehen, dass ein Lagerdeckel in der Einformung in einem Endabschnitt des Lagerabschnitts befestigt ist, wobei ein überstehender umlaufender Rand des Lagerdeckels auf einer äußeren Stirnseite des Lagerabschnitts aufliegt. Auf diese Weise kann der Innenraum des Festlagers vorteilhaft einfach abgedichtet werden.

Es ist zudem vorteilhaft, wenn der Lagerdeckel eine innere Stirnseite aufweist, welche in einem axialen Kontakt mit einer äußeren Stirnseite des Führungsholms steht, da auf diese Weise eine bestimmte Position des Lagerdeckels eingehalten werden kann.

Dabei ist es außerdem von Vorteil, dass die innere Stirnseite des Lagerdeckels mit einer äußeren Stirnseite des Bunds der Lagerbuchse zusammenwirkt und eine axiale Sicherung der Lagerbuchse in Richtung der Festlagerachse nach außen hin bildet. Auf diese Weise ist die Lagerbuchse auch in der axialen Richtung nach außen hin festgelegt, wobei keine zusätzlichen Festlegungsmaßnahmen erforderlich sind.

Es ist zudem von Vorteil, wenn die elliptische Bearbeitung der Sattelbohrung in dem Lagerbereich mit einer Doppelellipse ausgebildet ist, da auf diese Weise eine bedeutende gleichmäßige Reduzierung der Kantenbelastung ermöglicht wird.

Ein Ausführungsbeispiel der Erfindung wird nachfolgend anhand der beigefügten Zeichnungen beschrieben. Die Erfindung ist nicht auf dieses Ausführungsbeispiel beschränkt. Es zeigen:
- Figur 1: eine Scheibenbremse nach dem Stand der Technik in einer schematischen Draufsicht; und
- Figur 2: eine vergrößerte, schematische Schnittansicht eines erfindungsgemäßen Festlagers eines Ausführungsbeispiels einer erfindungsgemäßen Scheibenbremse.

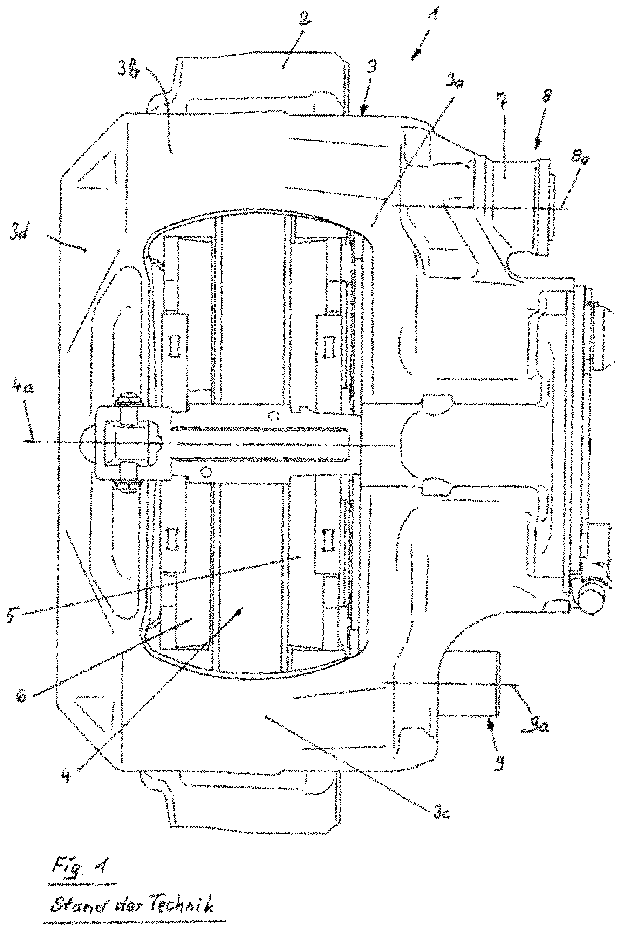

**Figur 1** zeigt eine Scheibenbremse 1 nach dem Stand der Technik für ein Nutzfahrzeug.

Die Scheibenbremse 1 umfasst einen Bremsträger 2, einen Bremssattel 3, eine Bremsscheibe 4 mit einer Bremsscheibendrehachse 4a und Bremsbeläge 5, 6.

Der Bremsträger 2 ist an einem Fahrzeug, welchem die Scheibenbremse 1 zugeordnet ist, ortsfest angebracht.

Der Bremssattel 3 weist einen Zuspannabschnitt 3a, zwei Zugstreben 3b, 3c und einen Sattelrücken 3d auf. Der Sattelrücken 3d ist mit dem Zuspannabschnitt 3a über die Zugstreben 3b verbunden ist. Die Bremsscheibe 4 wird von dem Bremssattel 3 so übergriffen, dass sie zwischen dem Zuspannabschnitt 3a und dem Sattelrücken 3b angeordnet ist. In dem Zuspannabschnitt 3a ist eine nicht gezeigte Zuspannvorrichtung der Scheibenbremse 1 angeordnet.

Beiderseits der Bremsscheibe 4 befindet sich jeweils ein Bremsbelag 5, 6 in dem Bremsträger 2.

Der Bremssattel 3 ist an dem Bremsträger 2, bezogen auf die Bremsscheibe 4, in Richtung der Bremsscheibendrehachse 4a axial verschiebbar angebracht. Hierzu sind zwei Lagerungen vorgesehen, von denen eine ein Festlager 8 mit einer Festlagerachse 8a und das andere ein Loslager 9 mit einer Loslagerachse 9a bildet. Die Festlagerachse 8a und die Loslagerachse 9a verlaufen parallel zueinander und parallel zu der Bremsscheibendrehachse 4a.

Das Festlager 8 und das Loslager 9 weisen jeweils ein inneres Ende und ein äußeres Ende auf. Die inneren Enden weisen zu der Bremsscheibe 4 hin, wohingegen die äußeren Enden von der Bremsscheibe 4 wegweisen.

Unter dem Begriff "nach innen" ist die Richtung auf die Bremsscheibe 4 zu verstehen, wobei der Begriff "nach außen" die entgegengesetzte Richtung von der Bremsscheibe 4 weg (in Richtung eines nicht gezeigten Bremszylinders) bedeutet.

In diesem Sinne sind die Attribute "innere, innerer" usw. mit den zugehörigen Bereichen bzw. Abschnitten von Bauteilen so zu verstehen, dass diese Bereiche bzw. Abschnitte von Bauteilen näher an der Bremsscheibe 4 angeordnet sind als die Bereiche bzw. Abschnitte von Bauteilen, welche mit den Attributen "äußere, äußerer" usw. verknüpft sein.

Der Bremssattel 3 weist an einer Seite des Zuspannabschnitts einen Lagerabschnitt 7 auf. Der Lagerabschnitt 7 nimmt das Festlager 8 auf, wie unten noch weiter erläutert wird.

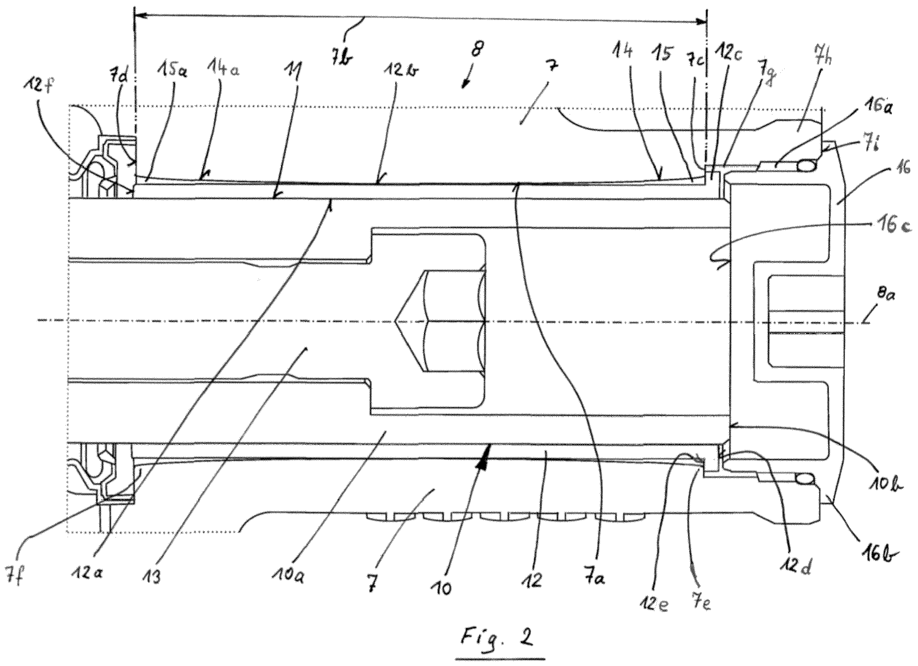

**Figur 2** ist eine vergrößerte, schematische Schnittansicht eines erfindungsgemäßen Festlagers 8 eines Ausführungsbeispiels einer erfindungsgemäßen Scheibenbremse 1.

Das Festlager 8 mit Festlagerachse 8a umfasst einen Führungsholm 10, eine Lagerbuchse 12, ein Befestigungselement 13 und einen Lagerdeckel 15.

Der Führungsholm 10 weist einen kreiszylindrischen Holmkörper 10a mit einer Stirnseite 10b auf.

In dem Holmkörper 10a ist eine abgestufte Längsbohrung (nicht bezeichnet) eingeformt, welche zur Aufnahme des Befestigungselementes 13 dient.

Eine Längsachse des Holmkörpers 10 verläuft im zusammengebauten Zustand in der Festlagerachse 8a. Die Stirnseite 10b weist nach außen. Im zusammengebauten Zustand ist der Führungsholm 10 mittels des Befestigungselementes 13, das hier eine Zylinderkopfschraube ist und sich längs durch den Holmkörper 10a erstreckt, an dem Bremsträger 2 befestigt.

Der Holmkörper 10a des Führungsholms 10 weist eine umlaufende Fläche einer Holmaußenseite 11 auf, über welche die Lagerbuchse 12 mit einer Innenfläche 12a in Längsrichtung des Führungsholms 10 aufgeschoben ist. Die Innenfläche 12 steht dann in Kontakt mit der Holmaußenseite 11 des Holmkörpers 10a des Führungsholms 10.

Der Führungsholm 10 ist mit der Lagerbuchse 12 in einer Sattelbohrung 7a des Lagerabschnitts 7 des Zuspannabschnitts 3a des Bremssattels 3 aufgenommen.

Die Lagerbuchse 12 ist eine hohlzylindrische Gleitlagerbuchse mit einer Innenbohrung mit der Innenfläche 12a mit Kreisquerschnitt und einer Außenfläche 12b ebenfalls mit Kreisquerschnitt.

Die Lagerbuchse 12 weist zudem an einem äußeren Ende einen umlaufenden Bund 12c mit einer äußeren Stirnseite 12d und mit einer der äußeren Stirnseite 12d gegenüberliegenden inneren Stirnseite 12e auf. Das andere, innere Ende der Lagerbuchse 12 ist mit einer weiteren Stirnseite 12f versehen.

Die Lagerbuchse 12 ist im zusammengebauten Zustand des Festlagers 8 in der Sattelbohrung 7a in einem Lagerbereich 7b des Lagerabschnitts 7 eingesetzt, z.B. eingepresst. Dabei erstreckt sich die Außenfläche 12b der Lagerbuchse 12 von der inneren Stirnseite 12e an dem Bund 12c bis zu der weiteren Stirnseite 12f der Lagerbuchse 12 innerhalb des Lagerbereichs 7b der Sattelbohrung 7a des Lagerabschnitts 7.

Der Lagerbereich 7b der Sattelbohrung 7a verläuft zwischen einer ersten, äu-ßeren Abstufung 7c an einem äußeren Ende der Sattelbohrung 7a und einer zweiten, inneren Abstufung 7d an einem inneren Ende der Sattelbohrung 7a.

Die Sattelbohrung 7a ist in dem Lagerbereich 7b mit einer elliptischen Bearbeitung 14, 14a versehen. Die elliptische Bearbeitung 14, 14a ist hier symmetrisch zu einer gedachten Mitte des Lagerbereichs 7b der Sattelbohrung 7a ausgebildet. Diese elliptische Ausbildung ist vorzugsweise eine so genannte Doppelellipse. Dabei vergrößert sich ein Innendurchmesser der Sattelbohrung 7a ausgehend von der gedachten Mitte des Lagerbereichs 7b der Sattelbohrung 7a auf beiden Seiten der gedachten Mitte in Richtung der Festlagerachse 8a zu den Enden der Sattelbohrung 7a hin.

Dabei steht eine Außenfläche 12b der Lagerbuchse 12 mit der Sattelbohrung 7a des Lagerabschnitts 7 in Kontakt.

Dieser Kontakt erstreckt sich hier jedoch nicht über die gesamte Außenfläche 12b der Lagerbuchse 12, sondern ist in dem zusammengebauten Zustand nach Figur 2 in einem mittleren Bereich der Außenfläche 12b der Lagerbuchse 12 bezogen auf die Festlagerachse 8a angeordnet, wenn die Scheibenbremse 1 unbelastet ist.

Die Enden der Sattelbohrung 7a mit den Abstufungen 7c, 7d weisen jeweils eine Kante 7e, 7f auf. Aufgrund der elliptischen Bearbeitung 14, 14a der Sattelbohrung 7a ergibt sich ein jeweiliges Spiel 15, 15a zwischen der Außenfläche 12b der zylindrischen Lagerbuchse 12 und der Innenwand der Sattelbohrung 7a.

Auf diese Weise wird mittels der elliptischen Bearbeitung 14, 14a der Sattelbohrung 7a eine Kantenbelastung der Kanten 7e, 7f der Sattelbohrung 7a auf die Lagerbuchse 12 vorteilhaft entschärft.

An die erste, äußere Abstufung 7c schließt sich in Richtung der Festlagerachse 8a weiter nach außen hin eine Ausdrehung koaxial zu der Sattelbohrung 7a als Einformung 7g an, deren Innendurchmesser größer als der Innendurchmesser der Sattelbohrung 7a an deren äußerer Kante 7e ist.

Im eingebauten Zustand des Festlagers 8 liegt der Bund 12c der Lagerbuchse 12 mit seiner inneren Stirnseite 12e an der ersten Abstufung 7c an und bildet einen axialen Anschlag, d.h. axialer Festsitz, der Lagerbuchse 12 in Richtung der Festlagerachse 8a nach innen hin.

Der Lagerdeckel 16 ist mittels einer Befestigung 16, hier ein Gewinde, in der Einformung 7g in dem Lagerabschnitt 7 in einem Endabschnitt 7h befestigt und mit einer nicht bezeichneten Dichtung in der Einformung 7g in dem Endabschnitt 7h gegenüber der Außenatmosphäre abgedichtet. Dabei liegt ein überstehender umlaufender Rand 16b des Lagerdeckels 16 auf einer äußeren Stirnseite 7i des Lagerabschnitts 7 auf.

Der Lagerdeckel 16 weist eine innere Stirnseite 16c auf, welche in einem axialen Kontakt mit der äußeren Stirnseite 10b des Führungsholms 10 steht. Damit kann eine bestimmte axiale Position des Lagerdeckels 12 eingehalten werden.

Zwischen der inneren Stirnseite 16c des Lagerdeckels 16 und der äußeren Stirnseite 12d der Lagerbuchse 12 besteht eine weitere axiale Sicherung der Lagerbuchse 12 in Richtung der Festlagerachse 8a nach außen hin mit einem bestimmten Axialspiel.

Die sich durch das Gewicht des (nicht gezeigten, aber leicht vorstellbaren) Bremszylinders der Scheibenbremse 1, verschiedene Einbaulagen, Schrägverschleiß der Bremsbeläge 5, 6 und der Last aus dem Betriebsbremsmoment ergebende Kantenbelastung (Kanten 7e, 7f des Lagerabschnitts 7) auf Führungsholm 10 und Lagerbuchse 12 jeweils an den Enden der Lagerung, d.h. der Lagerbuchse 12, wird durch das oben beschriebene erfindungsgemäße Festlager 8 aufgrund der mit der elliptischen Bearbeitung 14, 14a versehenen Sattelbohrung 7a bedeutend reduziert.

Da diese Kantenbelastung reduziert ist, wird auch ein Verschleiß, welcher sich auf Geräuschbildung bzw. auf die Bremssattelverschiebbarkeit auswirken kann, vermindert.

Die Erfindung ist nicht auf die beschriebenen Ausführungsbeispiele beschränkt, sondern kann im Rahmen der Ansprüche modifiziert werden.

### Bezugszeichenliste

- 1: Scheibenbremse
- 2: Bremsträger
- 3: Bremssattel
- 3a: Zuspannabschnitt
- 3b, 3c: Zugstrebe
- 3d: Sattelrücken
- 4: Bremsscheibe
- 4a: Bremsscheibendrehachse
- 5, 6: Bremsbelag
- 7: Lagerabschnitt
- 7a: Sattelbohrung
- 7b: Lagerbereich
- 7c, 7d: Abstufung
- 7e, 7f: Kante
- 7g: Einformung
- 7h: Endabschnitt
- 7i: Stirnseite
- 8: Festlager
- 8a: Festlagerachse
- 9: Loslager
- 9a: Loslagerachse
- 10: Führungsholm
- 10a: Holmkörper
- 10b: Stirnseite
- 11: Holmaußenseite
- 12: Lagerbuchse
- 12a: Innenfläche
- 12b: Außenfläche
- 12c: Bund
- 12d, 12e, 12f: Stirnseite
- 13: Befestigungselement
- 14, 14a: Bearbeitung
- 15, 15a: Spiel
- 16: Lagerdeckel
- 16a: Befestigung
- 16b: Stirnseite

## Patentansprüche

1. Scheibenbremse (1) für ein Nutzfahrzeug, mit einem eine Bremsscheibe (4) umfassenden Bremssattel (3), der an einem ortsfesten Bremsträger (2) durch zwei Lagerungen, bezogen auf die Bremsscheibe (4), axial verschiebbar befestigt ist, wobei die Lagerungen jeweils einen mit dem Bremsträger (2) fest verbundenen Führungsholm (10) aufweisen, von denen zur axialen Verschiebbarkeit des Bremssattels (3) einer der Führungsholme (10) als Festlager (8) mit einer Festlagerachse (8a) und der andere der Führungsholme (10) in einem als Loslager (9) ausgebildeten Gleitlager geführt ist, wobei zumindest das Festlager (8) eine den Führungsholm (10) umgreifende und verschiebegesichert in einer Sattelbohrung (7a) eines Lagerabschnitts (7) des Bremssattels (3) gehaltene Lagerbuchse (12) aufweist,
**dadurch gekennzeichnet, dass**
die Sattelbohrung (7a) in einem Lagerbereich (7b) mit einer elliptischen Bearbeitung (14, 14a) ausgebildet ist.

2. Scheibenbremse (1) nach Anspruch 1, **dadurch gekennzeichnet, dass** die Lagerbuchse (12) im zusammengebauten Zustand des Festlagers (8) in der Sattelbohrung (7a) in dem Lagerbereich (7b) eingesetzt ist, wobei der Lagerbereich (7b) der Sattelbohrung (7a) zwischen einer ersten, äußeren Abstufung (7c) an einem ersten, äußeren Ende der Sattelbohrung (7a) und einer zweiten, inneren Abstufung (7d) an einem zweiten, inneren Ende der Sattelbohrung (7a) verläuft.

3. Scheibenbremse (1) nach Anspruch 2, **dadurch gekennzeichnet, dass** die elliptische Bearbeitung (14, 14a) der Sattelbohrung (7a) symmetrisch zu einer gedachten Mitte des Lagerbereichs (7b) der Sattelbohrung (7a) ausgebildet ist, wobei sich ein Innendurchmesser der Sattelbohrung (7a) ausgehend von der gedachten Mitte des Lagerbereichs (7b) der Sattelbohrung (7a) auf beiden Seiten der gedachten Mitte in Richtung der Festlagerachse (8a) des Festlagers (8) zu den Enden der Sattelbohrung (7a) hin vergrößert.

4. Scheibenbremse (1) nach Anspruch 3, **dadurch gekennzeichnet, dass** eine Außenfläche (12b) der Lagerbuchse (12) mit der Sattelbohrung (7a) in Kontakt steht, wobei sich dieser Kontakt in dem zusammengebauten Zustand in einem mittleren Bereich der Außenfläche (12b) der Lagerbuchse (12) bezogen auf die Festlagerachse (8a) angeordnet ist, wenn die Scheibenbremse (1) unbelastet ist.

5. Scheibenbremse (1) nach einem der Ansprüche 2 bis 4, **dadurch gekennzeichnet, dass** die Enden der Sattelbohrung (7a) mit den Abstufungen (7c, 7d) jeweils eine Kante (7e, 7f) aufweisen, wobei ein jeweiliges Spiel (15, 15a) zwischen der Außenfläche (12b) der zylindrischen Lagerbuchse (12) und der Sattelbohrung (7a) mit der elliptischen Bearbeitung (14, 14a) der Sattelbohrung (7a) gebildet ist.

6. Scheibenbremse (1) nach einem der Ansprüche 2 bis 5, **dadurch gekennzeichnet, dass** sich eine Ausdrehung koaxial zu der Sattelbohrung (7a) als Einformung (7g) in dem Lagerabschnitt (7) an die erste, äußere Abstufung (7c) in Richtung der Festlagerachse (8a) nach außen hin anschließt, deren Innendurchmesser größer als der Innendurchmesser der Sattelbohrung (7a) an dem äußeren Ende der Sattelbohrung (7a) ist.

7. Scheibenbremse (1) nach Anspruch 6, **dadurch gekennzeichnet, dass** die Lagerbuchse (12) an ihrem äußeren Ende einen umlaufenden Bund (12c) aufweist, welcher mit der Abstufung (7c) zusammenwirkt und einen axialen Anschlag der Lagerbuchse (12) in Richtung der Festlagerachse (8a) nach innen hin bildet.

8. Scheibenbremse (1) nach Anspruch 7, **dadurch gekennzeichnet, dass** ein Lagerdeckel (16) in der Einformung (7g) in einem Endabschnitt (7h) des Lagerabschnitts (7) befestigt ist, wobei ein überstehender umlaufender Rand (16b) des Lagerdeckels (16) auf einer äußeren Stirnseite (7i) des Lagerabschnitts (7) aufliegt.

9. Scheibenbremse (1) nach Anspruch 8, **dadurch gekennzeichnet, dass** der Lagerdeckel (16) weist eine innere Stirnseite (16c) aufweist, welche in einem axialen Kontakt mit einer äußeren Stirnseite (10b) des Führungsholms (10) steht.

10. Scheibenbremse (1) nach Anspruch 9, **dadurch gekennzeichnet, dass** die innere Stirnseite (16c) des Lagerdeckels (16) mit einer äußeren Stirnseite (12d) des Bunds (12d) der Lagerbuchse (12) zusammenwirkt und eine axiale Sicherung der Lagerbuchse (12) in Richtung der Festlagerachse (8a) nach au-ßen hin bildet.

11. Scheibenbremse (1) nach einem der vorhergehenden Ansprüche, **dadurch gekennzeichnet, dass** die elliptische Bearbeitung (14, 14a) der Sattelbohrung (7a) in dem Lagerbereich (7b) mit einer Doppelellipse ausgebildet ist.
